# EUROPEAN PATENT SPECIFICATION

(11) **EP 0 340 449 B1**
(45) Date of publication and mention of the grant of the patent: **18.08.1993**
(21) Application number: 89105422.3
(22) Date of filing: 28.03.1989
(51) Int. Cl.: A23B 4/03, A23B 4/06, A23B 4/12, A23L 1/318

(54) **Dehydrated meat product**
Getrockenes Fleischprodukt
Produit à base de viande déshydratée

(30) Priority: 03.05.1988 US 189771
(43) Date of publication of application: 08.11.1989
(73) Proprietor: SOCIETE DES PRODUITS NESTLE S.A., 1800 Vevey (CH)
(72) Inventor: Lee, Eldon Chen-Hsiung, New Milford, Conn. 06776 (US)

(56) References cited:
- EP-A- 0 149 829
- FR-A- 1 518 435
- GB-A- 1 076 923
- US-A- 3 930 046

## Description

The present invention relates to a process for the preparation of a dehydrated meat product.

The main emphasis in the past on development work for manufacturing dehydrated meat products has been directed to the use of reconstituted meat for reasons of quality and consistency. However, owing to food legislation and food regulations in Europe, particularly in Germany, reconstituted meat is not accepted as meat in all cases and can create label declaration problems. In addition, owing to consumer preference, there is a growing demand for genuine meat pieces which have not undergone prior disintegration and subsequent reconstitution/reshaping and which therefore show the original meat structure. Unfortunately, genuine meat is very susceptible to lipid oxidation and difficult to protect with antioxidants. In addition, freeze-dried genuine meat tends to become rancid rapidly because of its porous texture. In view of all this, genuine meat has a shorter shelf life than reconstituted meat.

In order to overcome lipid oxidation synthetic anti-oxidants which block the oxidative reactions are commonly used. However, owing to toxicological and nutritional considerations, only a very few synthetic antioxidants are permitted in food applications e.g. butylhydroxytoluene (BHT), butylhydroxyanisole (BHA), propyl gallate (PG) and t-butyl hydroquinone (TBHQ). Even these anti-oxidants are now being examined by regulatory agencies and consumer activists and these developments have urged the need to exploit new sources of potent naturally occurring and safe antioxidants.

The use of tea, rosemary extract, tocopherol, ascorbyl palmitate was evaluated in dehydrated genuine meats. Tea and Rosemary AR showed some effective antioxidant effect in dehydrated chicken but not in dehydrated red meat whereas tocopherol and ascorbyl palmitate showed poor antioxidant effect in dehydrated meat owing to their poor solubility.

In United States Patents Nos. 2955042, 4057650 and 4239785, there is described the use of ascorbic acid, isoascorbic acid (erythorbic acid) and their respective salts in meat curing and the use of protein hydrolysates or amino acids as seasonings in curing compositions.

However, although ascorbic acid is an excellent anti-oxidant in dehydrated meat, deamination of the lysine in the meat protein by reaction with oxidised ascorbic acid at low moisture causes not only the formation of a red pigment -2,2′-nitrilodi-2(2′)-deoxyascorbic acid (NDA)- but also a nutritive loss of the essential protein, lysine. Moreover, protein hydrolysates and amino acids give very little antioxidant effect.

Antioxidative Maillard reaction products have been proposed for the storage stability of several food systems, but for the formation of effective antioxidants in meat the sugars must be combined with basic amino acids such as arginine or histidine. However, the resulting Maillard reaction products with these basic amino acids do not generate the right meaty flavour and, in fact, they generate an off-flavour in dehydrated meats. On the other hand, Maillard reaction meat flavours derived from sugars and protein hydrolysates with or without sulphur containing compounds such as cysteine and thiamine, although giving a desirable flavour, do not provide satisfactory antioxidant activity.

We have found, surprisingly, that the combination of ascorbic acid, its isomers and salts thereof with Maillard reaction meat flavours impart not only excellent stability against rancidity but also a very pleasant meaty flavour both to dehydrated genuine meat and dehydrated reconstituted meat.

Accordingly, the present invention provides a process for the preparation of a dehydrated meat product which comprises contacting the meat with ascorbic acid or a salt thereof and a Maillard reaction meat flavour derived from a protein hydrolysate to provide effective penetration into the meat, cooking, and finally drying the meat.

The process of the present invention is applicable to both genuine meat as well as to disintegrated meat. By "ascorbic acid" we mean either L-ascorbic acid or its isomer D-isoascorbic acid (erythorbic acid). The salt may be any food acceptable salt for instance, sodium ascorbate. The amount of ascorbic acid or salt thereof absorbed by the meat may be from 0.01 to 0.5%, preferably from 0.02 to 0.2% and especially from 0.03 to 0.1% by weight based on the weight of meat.

The Maillard reaction meat flavours and their preparation are well known to those skilled in the art. They are generally prepared by reacting an amino acid source e.g. protein hydrolysates, amino acid mixtures, various amino acids, preferably glutamate, thiamine or a sulphur containing amino-acid such as cysteine or cystine or their derivatives, a reducing sugar such as pentose, hexose or other carbohydrates, and a characteristic fat or oil component and/or fatty aldehydes. Thiamine or sulphur containing amino-acids such as cysteine, cystine or their derivatives are essential in the reaction for meat flavour precusors. The amount of the Maillard reaction meat flavour absorbed by the meat may be from 0.01 to 1.0%, preferably from 0.025 to 0.5% and especially from 0.05 to 0.25% by weight based on the weight of the meat.

When the process of the present invention is applied to genuine meat, the meat is conveniently contacted with a dilute aqueous solution containing the ascorbic acid or salt thereof and the Maillard reaction meat flavour by any method suitable for providing effective penetration for example by direct injection or marinating. The amount of ascorbic acid or salt thereof in the aqueous solution may be from 0.1 to 10%, preferably from 0.25 to 5% and especially from 0.5 to 2% by weight based on the weight of the solution. The amount of Maillard reaction meat flavour in the aqueous solution may be from 0.2 to 20%, preferably from 0.5 to 10% and especially from 1.0 to 5.0% by weight based on the weight of the solution. The pH during the contacting may be from 5 to 8 but is preferably from 6 to 7.5 and especially substantially neutral.

Advantageously, food acceptable buffering agents such as bicarbonates, citrates, phosphates, pyrophosphates, polyphosphates etc may be present in the aqueous solution: sodium bicarbonate is especially desirable since it imparts improved tenderness to the meat. Optionally, other chelating agents may be present e.g. EDTA, mannitol or gluconate.

The temperature of the contacting step may be any temperature commonly used in marinating meat e.g. from refrigeration temperature above 0°C to the temperature below the denaturation of the meat protein (approximately 55°C). In this invention, ambient temperatures e.g. from 15° to 30°C are suitable.

In marination, the amount of marination solution used may be sufficient to cover the meat but the amount may be reduced if the solution is circulated as long as it contacts the meat effectively. The contacting solution is preferably agitated to ensure effective penetration into the meat, for instance, by nitrogen bubbling.

In marination, the meat is generally contacted with the solution containing ascorbic acid or a salt thereof and the Maillard reaction meat flavour for a sufficient period of time to achieve effective penetration into the meat which depends on the size of the meat pieces, the concentration of the solution, agitation conditions and temperature. For example, the time of contact may conveniently be from 10 minutes to 2 hours, more usually from 20 minutes to 1 hour.

When the process of the present invention is applied to genuine meat before contacting with the ascorbic acid or salt thereof and the Maillard reaction meat flavour, the meat is advantageously cut, for example, into pieces having a volume from 0.03 to 6.9 cm³ (cc), preferably from 0.2 to 2.0 cm³ (cc), conveniently by dicing. Slices or larger pieces of meat may be used but they may require longer contact times and the use of special equipment such as vacuum tumblers which facilitate penetration into the meat. The genuine meat is preferably cooked after contacting with the ascorbic acid or a salt thereof and the Maillard reaction meat flavour and the cooking may be carried out by any conventional method, for example, by boiling water, broiling, frying, microwave heating, roasting, pressure cooking but preferably by steam cooking.

When the process of the present invention is applied to disintegrated meat, the ascorbic acid or salt thereof and the Maillard reaction meat flavour may be blended directly with the disintegrated meat prior to reconstitution/shaping without using any water. This is advantageous because when water is used as a processing aid, additional processing steps may be required for utilisation or disposal of marination solutions by removing water afterwards. Although an aqueous solution could be used for reconstituted meat, there is no advantage obtained thereby. The cooking of the meat may be carried out prior to grinding, prior to reconstitution or after reconstitution. The cooking may be carried out before or after contacting with ascorbic acid or a salt thereof and the Maillard reaction meat flavour and it may be carried out by any conventional method as for genuine meat. Advantageously, binders such as soy protein, milk protein, egg albumin or wheat gluten may be added where they may help to bind fat and moisture, and to retain the intact granules of reconstituted meat.

Finally, the meat is dried preferably to a moisture content of from 1% to 5%. Genuine meat is advantageously dried by freeze-drying. Reconstituted meat may be dried by any suitable method such as fluidised bed drying.

The dehydrated meat may afterwards be packed in air, but preferably in nitrogen, carbon dioxide or vacuum conditions with oxygen impermeable packing materials.

The process of the invention is applicable to all kinds of dehydrated meats for example beef, pork, turkey, chicken and seafoods. It is particularly suitable for meats which are to be used as garnishes.

The following Examples further illustrate the present invention:

### Example 1

100 parts of beef shoulder was semi-frozen, sliced and then diced into cubes of 0.6 cm³ (cc) and marinated in 100 parts of an aqueous solution containing 1 part of ascorbic acid, 3 parts of a Maillard reaction meat flavour prepared by reacting protein hydrolysate, cysteine and thiamine with reducing sugars and 1 part of sodium bicarbonate at pH 7 with constant agitation by nitrogen bubbling at ambient temperature for 30 minutes.

The marinated cubes were drained, placed in a steamer and steamed with constant agitation until well-done, and then cooled in a freezer. The meat was then placed in a freeze dryer and refrigerated at -25°C for 2 hours prior to commencing the dehydration process. The conditions for dehydration were as follows:

| | |
|---|---|
| drying plate temperature | 60°C |
| pressure | 400 millitorrs |
| condenser temperature | -40°C |
| maximum temperature of product | 50°C |

The moisture content of the dried meat was 2%. The freeze-dried meat was afterwards packed in 150 ml aluminium cans (each containing about 24.2 g meat) in nitrogen by vacuuming the chamber down to 94.6 kPa (710 mm Hg) then flushing nitrogen back before sealing.

The ethane production in the headspace measured by gas chromatographic analysis after 18 months storage at 20°C was 0.8 ppm. This indicates excellent storage stability.

### Example 2

A similar procedure to that described in Example 1 was followed except that, instead of sodium bicarbonate, a similar quantity of trisodium pyrophosphate was used. The ethane production in the headspace after 18 months storage at 20°C was 0.8 ppm indicating excellent storage stability.

### Comparative Example A

A similar procedure to that described in Example 1 or 2 was followed but without the marination treatment. The ethane production in the headspace after 18 months storage at 20°C was 3.1 ppm which indicates significantly poorer storage stability to that of the meat product of Examples 1 and 2.

### Example 3

A similar procedure to that described in Example 1 was followed except that the beef was packed in air instead of nitrogen. The ethane production in the headspace after 18 months storage at 20°C was 2.6 ppm which indicates very good stability.

### Comparative Example B

In a similar procedure to that described in Example 3 but without the marination treatment, the ethane production in the headspace after 18 months storage at 20°C was 6.0 ppm which is significantly poorer than that of the product of Example 3.

### Example 4

A similar procedure to that described in Example 1 was carried out but using pork instead of beef. The ethane production in the headspace after 6 months storage at 37°C was 2.2 ppm which indicates excellent storage stability.

### Comparative Example C

In a similar procedure to that described in Example 4 but without the marination treatment, a freeze dried pork product was obtained. The ethane production in the headspace after 6 months storage at 37°C was 8.4 ppm which is significantly poorer than that of the product of Example 4.

### Example 5

A similar procedure to that described in Example 4 was followed except that the pork was packed in air instead of nitrogen. The ethane production in the headspace after 6 months storage at 37°C was 3.8 ppm which indicates very good storage stability.

### Comparative Example D

In a similar procedure to that described in Example 5 but without the marination treatment, the ethane production in the headspace after 6 months storage at 37°C was 22.2 ppm which is significantly worse than that of the product of Example 5.

### Example 6

75 parts of pre-cooked ground beef, 20 parts of soy protein and 5 parts of fresh egg white were mixed and blended with 0.05 parts of ascorbic acid and 0.15 parts of a Maillard reaction meat flavour prepared by reacting protein hydrolysate, cysteine and thiamine with reducing sugar, then extruded and granulated to cylindrical pellets with a diameter of 0.5 cm and a length of 1 cm. The granulated reconstituted meat was dehydrated by using a fluidised bed dryer in which the drying cycles were:
1) 100°C for 30 minutes,
2) 70°C for 60 minutes and
3) 60°C for 60 minutes.

The fluidised bed dryer was preheated to the desired temperature prior to meat introduction and the product was dried to a moisture content below 3%. The dehydrated meat was afterwards packed with oxygen - impermeable packing materials in nitrogen. The product showed good storage stability.

## Claims

1. A process for the preparation of a dehydrated meat product which comprises contacting the meat with ascorbic acid or a salt thereof and a Maillard reaction meat flavour derived from a protein hydrolysate to provide effective penetration into the meat, cooking, and finally drying the meat.

2. A process according to claim 1 wherein the amount of ascorbic acid or salt thereof absorbed by the meat is from 0.01 to 0.5% by weight based on the weight of the meat.

3. A process according to claim 1 wherein the amount of the Maillard reaction meat flavour absorbed by the meat is from 0.01 to 1.0% by weight based on the weight of the meat.

4. A process according to claim 1 wherein the meat is genuine meat.

5. A process according to claim 4 wherein, before contacting with the ascorbic acid or salt thereof and the Maillard reaction meat flavour, the meat is diced into pieces having a volume from 0.03 to 6.9 cm³ (cc).

6. A process according to claim 4 wherein the meat is contacted with a dilute aqueous solution containing the ascorbic acid or salt thereof and the Maillard reaction meat flavour by marinading.

7. A process according to claim 6 wherein the amount of ascorbic acid or salt thereof in the aqueous solution is from 0.1 to 10% by weight based on the weight of the solution.

8. A process according to claim 6 wherein the amount of Maillard reaction meat flavour in the aqueous solution is from 0.2 to 20% by weight based on the weight of the solution.

9. A process according to claim 6 wherein the pH during the contacting is from 6.0 to 7.5.

10. A process according to claim 6 wherein the pH during the contacting is substantially neutral.

11. A process according to claim 6 wherein the pH is adjusted during the contacting by sodium bicarbonate.

12. A process according to claim 4 wherein the meat is cooked after contacting with ascorbic acid or a salt thereof and the Maillard reaction meat flavour.

13. A process according to claim 4 wherein the genuine meat is dried by freeze-drying.

14. A process according to claim 1 wherein the meat is disintegrated meat.

15. A process according to claim 14 wherein the disintegrated meat is contacted directly with the ascorbic acid or salt thereof and the Maillard reaction meat flavour in the absence of water prior to reconstitution/shaping.

16. A process according to claim 14 wherein the cooking of the meat is carried out prior to grinding, prior to reconstitution or after reconstitution.

17. A process according to claim 14 wherein the reconstituted meat is dried by fluidised bed drying.

18. A process according to claim 1 wherein the dried meat is afterwards packed in nitrogen.

## Patentansprüche

1. Verfahren zur Herstellung eines dehydratisierten Fleischproduktes, welches das Inberührungbringen des Fleisches mit Ascorbinsäure oder einem Salz derselben und mit einem Maillard-Reaktions-Fleischgeschmacksstoff, welcher aus einem Protein-Hydrolysat stammt, zwecks Erzielung eines wirksamen Eindringens in das Fleisch, das Kochen und schließlich das Trocknen des Fleisches umfaßt.

2. Verfahren nach Anspruch 1, wobei die Menge der Ascorbinsäure oder von deren Salz, welche von dem Fleisch absorbiert wird, 0,01 bis 0,5 Gew.-%, bezogen auf das Gewicht des Fleisches, beträgt.

3. Verfahren nach Anspruch 1, wobei die von dem Fleisch absorbierte Menge des Maillard-Reaktions-Fleischgemschacksstoffes 0,01 bis 1,0 Gew.-%, bezogen auf das Gewicht des Fleisches, beträgt.

4. Verfahren nach Anspruch 1, wobei das Fleisch Frischfleisch ist.

5. Verfahren nach Anspruch 4, wobei das Fleisch, bevor es mit der Ascorbinsäure oder einem Salz derselben und mit dem Maillard-Reaktions-Fleischgeschmacksstoff in Berührung gebracht wird, zu würfelförmigen Stückchen eines Volumens von 0,03 bis 6,9 cm³ (cc) zerschnitten wird.

6. Verfahren nach Anspruch 4, wobei das Fleisch durch Marinieren mit einer verdünnten wässerigen lösung in Berührung gebracht wird, welche die Ascorbinsäure oder ein Salz derselben und den Maillard-Reaktions-Fleischgeschmacksstoff enthält.

7. Verfahren nach Anspruch 6, wobei die Menge der Ascorbinsäure oder von deren Salz in der wässerigen Lösung 0,1 bis 10 Gew.-%, bezogen auf das Gewicht der Lösung, beträgt.

8. Verfahren nach Anspruch 6, wobei die Menge des Maillard-Reaktions-Fleischgeschmacksstoffes in der wässrigen Lösung 0,2 bis 20 Gew.-%, bezogen auf das Gewicht der Lösung, beträgt.

9. Verfahren nach Anspruch 6, wobei der pH-Wert während des Inberührungbringens 6,0 bis 7,5 beträgt.

10. Verfahren nach Anspruch 6, wobei der pH-Wert während des Inberührungbringens im wesentlichen neutral ist.

11. Verfahren nach Anspruch 6, wobei der pH-Wert während des Inberührungbringens mit Natriumbicarbonat eingestellt wird.

12. Verfahren nach Anspruch 4, wobei das Fleisch, nachdem es mit der Ascorbinsäure oder einem Salz derselben und mit dem Maillard-Reaktions-Fleischgeschmacksstoff in Berührung gebracht worden ist, gekocht wird.

13. Verfahren nach Anspruch 4, wobei das Frischfleisch durch Gefriertrocknen getrocknet wird.

14. Verfahren nach Anspruch 1, wobei das Fleisch zerkleinertes Fleisch ist.

15. Verfahren nach Anspruch 14, wobei das zerkleinerte Fleisch vor dem Rekonstituieren/Formen und in Abwesenheit von Wasser direkt mit der Ascorbinsäure oder mit einem Salz derselben und mit dem Maillard-Resktions-Fleischgeschmacksstoff in Berührung gebracht wird.

16. Verfahren nach Anspruch 14, wobei das Kochen des Fleisches vor dem Zerkleineren, vor dem Rekonstituieren oder nach dem Rekonstituieren durchgeführt wird.

17. Verfahren nach Anspruch 14, wobei das rekonstituierte Fleisch durch Fließbetttrocknung getrocknet wird.

18. Verfahren nach Anspruch 1, wobei das getrocknete Fleisch anschließend unter Stickstoff verpackt wird.

## Revendications

1. Procédé de préparation d'un produit à base de viande déshydratée qui comprend la mise en contact de la viande avec de l'acide ascorbique ou un de ses sels et un arôme de viande formé par réaction de Maillard, dérivé d'un hydrolysat de protéine, pour provoquer une pénétration efficace dans la viande, une cuisson et, finalement, un séchage de la viande.

2. Procédé suivant la revendication 1, dans lequel la quantité d'acide ascorbique ou de son sel absorbée par la viande est comprise dans l'intervalle de 0,01 à 0,5 % en poids sur la base du poids de la viande.

3. Procédé suivant la revendication 1, dans lequel la quantité de l'arôme de viande formé par réaction de Maillard, absorbée par la viande, est comprise dans l'intervalle de 0,01 à 1,0 % en poids sur la base du poids de la viande.

4. Procédé suivant la revendication 1, dans lequel la viande est de la viande naturelle.

5. Procédé suivant la revendication 4, dans lequel, avant mise en contact avec l'acide ascorbique ou son sel et l'arôme de viande formé par réaction de Maillard, la viande est coupée en morceaux ayant un volume de 0,03 à 6,9 cm³.

6. Procédé suivant la revendication 4, dans lequel la viande est mise en contact par marinage avec une solution aqueuse diluée contenant l'acide ascorbique ou son sel et l'arôme de viande formé par réaction de Maillard.

7. Procédé suivant la revendication 6, dans lequel la quantité d'acide ascorbique ou de son sel dans la solution aqueuse est comprise dans l'intervalle de 0,1 à 10 % en poids, sur la base du poids de la solution.

8. Procédé suivant la revendication 6, dans lequel la quantité d'arôme de viande formé par réaction de Maillard dans la solution aqueuse est comprise dans l'intervalle de 0,2 à 20 % en poids sur la base du poids de la solution.

9. Procédé suivant la revendication 6, dans lequel le pH au cours de la mise en contact est compris dans l'intervalle de 6,0 à 7,5.

10. Procédé suivant la revendication 6, dans lequel le pH au cours de la mise en contact est pratiquement le pH neutre.

11. Procédé suivant la revendication 6, dans lequel le pH est ajusté avec du bicarbonate de sodium au cours de la mise en contact.

12. Procédé suivant la revendication 4, dans lequel la viande est cuite après mise en contact avec l'acide ascorbique ou un de ses sels et l'arôme de viande formé par réaction de Maillard.

13. Procédé suivant la revendication 4, dans lequel la viande naturelle est séchée par lyophilisation.

14. Procédé suivant la revendication 1, dans lequel la viande est de la viande désagrégée.

15. Procédé suivant la revendication 14, dans lequel la viande désagrégée est mise en contact directement avec l'acide ascorbique ou son sel et l'arôme de viande formé par réaction de Maillard, en l'absence d'eau, avant reconstitution/façonnage.

16. Procédé suivant la revendication 14, dans lequel la cuisson de la viande est effectuée avant de hacher la viande, avant reconstitution ou après reconstitution.

17. Procédé suivant la revendication 14, dans lequel la viande reconstituée est séchée par séchage en lit fluidisé.

18. Procédé suivant la revendication 1, dans lequel la viande séchée est ensuite emballée sous atmosphère d'azote.
